# EUROPÄISCHE PATENTANMELDUNG

(11) **EP 2 712 698 A1**
(43) Veröffentlichungstag der Anmeldung: **02.04.2014**
(21) Anmeldenummer: 12186767.5
(22) Anmeldetag: 01.10.2012
(51) Int. Cl.: B23K 26/14, B23K 26/34, B23P 6/00

(54) **Pulverfördersystem für eine Laserpulverauftragsschweißvorrichtung**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE)

(57) **Zusammenfassung**

Es wird eine verbesserte Pulverzuführeinrichtung (1) für eine Laserauftragsschweißvorrichtung eingeführt. Die Pulverzuführeinrichtung weist ein erstes Pulverreservoir (2) , ein zweites Pulverreservoir (3) , eine erste Pulverfördervorrichtung (4) und eine zweite Pulverfördervorrichtung (5) auf. Die erste Pulverfördervorrichtung (4) ist dazu ausgebildet, ein Pulver von dem ersten Pulverreservoir (2) in das zweite Pulverreservoir (3) zu transportieren. Die zweite Pulverfördervorrichtung i(5) st dazu ausgebildet, das Pulver von dem zweiten Pulverreservoir (3) zu einer Übergabestelle 6) zu transportieren.

## Beschreibung

### Technisches Gebiet

Die Erfindung betrifft eine Pulverzuführeinrichtung für eine Laserpulverauftragsschweißvorrichtung und eine Laserpulverauftragsschweißvorrichtung mit einer solchen Pulverzuführeinrichtung sowie ihre Verwendung zum Ergänzen, Aufbauen oder Reparieren eines Werkstücks.

### Technischer Hintergrund

Beim Laserpulverauftragsschweißen wird ein feines metallisches Pulver auf eine Stelle eines Werkstücks aufgebracht und dort mit einem Laser aufgeschmolzen und mit dem Werkstück verschmolzen. Hierzu wird üblicherweise kontinuierlich eine bestimmte Menge Pulver aufgebracht und aufgeschmolzen, wobei die Pulverzuführung und der Laser über das beziehungsweise relativ zu dem Werkstück bewegt werden. Auf diese Weise kann dem Werkstück Material hinzugefügt werden, so dass es ergänzt oder repariert werden kann. Für eine Reparatur kann beispielsweise eine beschädigte Stelle des Werkstücks ausgebohrt und anschließend im Zuge des Laserpulverauftragsschweißens die ausgebohrte Stelle aufgefüllt werden. Auch ein schrittweises Aufbauen eines Werkstücks kann auf diese Weise erfolgen. Von besonderer Bedeutung sind solche Verfahren insbesondere dort, wo mit großen monokristallinen Werkstücken gearbeitet wird wie zum Beispiel bei der Fertigung oder dem sogenannten Refurbishment (Überarbeitung) von Gasturbinen.

Bei derartigen Verfahren hat die Auswahl geeigneter Parameter für die Menge des zuzuführenden Pulvers, die Laserleistung, den Laserdurchmesser und die Relativgeschwindigkeit, mit der die Pulverzuführung und der Laser über das Werkstück geführt werden, einen großen Einfluss auf die Eigenschaften des Prozesses. Für gute und vor allem reproduzierbare Ergebnisse ist eine genaue Einstellung und Einhaltung der gewählten Parameter von großer Wichtigkeit. Daher ist es unter anderem erstrebenswert, die innerhalb einer bestimmten Zeitspanne zugeführte Menge des Pulvers möglichst konstant halten zu können, so dass gleichbleibende Eigenschaften beim Aufschmelzen durch den Laser garantiert werden können. Beispielsweise kann die Leistung des Lasers so eingestellt werden, dass die bestimmte Menge des Pulvers vollständig aufgeschmolzen wird, so dass keine Kristallisationskeime in der Schmelze verbleiben, ohne es jedoch zu einer nennenswerten Verdampfung des aufgeschmolzenen Pulvers aufgrund einer zu hohen Laserleistung kommen zu lassen. Würde hierbei die Pulvermenge zu stark variieren, könnte es dazu kommen, dass entweder zuviel Material des Werkstücks aufgeschmolzen wird oder verdampft, oder aber, dass das aufgebrachte Pulver nicht vollständig aufgeschmolzen werden kann, so dass störende Kristallisationskeime in der Teilschmelze verbleiben, die eine epitaktische Fortsetzung der Kristallstruktur des unterliegenden Werkstücks stören.

Bei den hier im Vordergrund stehenden Anwendungen im Rahmen eines sogenannten Micro-Cladding-Prozesses werden relativ kleine Pulverzuführraten von etwa 100 bis 400 Milligramm pro Minute benötigt. Die üblicherweise eingesetzten konventionellen Pulverfördersysteme entstammen jedoch dem technischen Gebiet des technischen Spritzens, bei dem so kleine Pulverzuführraten unüblich sind. Dadurch ist für den Micro-Cladding-Prozess ein häufiges Messen des Pulvermassenstroms nötig, um die relativ großen Schwankungen der Pulverzuführrate erfassen und ausgleichen zu können.

Die beim Micro-Cladding-Prozess eingesetzten Pulverwerkstoffe werden in einer begrenzten Kornfraktion von 25 bis 50 Mikrometern Durchmesser verwendet. Die Pulverpartikel sollen dabei möglichst sphärisch geformt sein. Sind zu viele nichtsphärische Körner oder Körner mit einem Durchmesser kleiner als 20 Mikrometern enthalten, können sich die Förderbarkeit des Pulvers verschlechtern und die Pulverzuführrate variieren. Die Erfindung führt daher eine Pulverzuführeinrichtung ein, die speziell auf die Erfordernisse des Micro-Cladding-Prozesses abgestimmt ist.

### Zusammenfassung der Erfindung

Die Erfindung führt daher eine verbesserte Pulverzuführeinrichtung für eine Laserauftragsschweißvorrichtung ein. Die Pulverzuführeinrichtung weist ein erstes Pulverreservoir, ein zweites Pulverreservoir, eine erste Pulverfördervorrichtung und eine zweite Pulverfördervorrichtung auf. Die erste Pulverfördervorrichtung ist dazu ausgebildet, ein Pulver von dem ersten Pulverreservoir in das zweite Pulverreservoir zu transportieren. Die zweite Pulverfördervorrichtung ist dazu ausgebildet, das Pulver von dem zweiten Pulverreservoir zu einer Übergabestelle zu transportieren.

Die Pulverzuführeinrichtung der Erfindung besitzt den Vorteil, dass durch die Anreihung zweier Pulverreservoirs der Füllstand in dem zweiten Pulverreservoir gering gehalten werden kann, was aufgrund der geringeren Füllhöhe die in einer Pulverschüttung immer gegebenen Entmischungsvorgänge reduziert. Bei solchen Entmischungsvorgängen sinken Pulverkörner einer bestimmten Größe in der Schüttung nach unten, während solche einer anderen Größe in der Schüttung aufsteigen. Dadurch ergibt sich eine Ungleichverteilung der verschiedenen im Pulver enthaltenen Korngrößen, die sich negativ auf die Gleichmäßigkeit der Pulverförderraten zu der Laserauftragsschweißvorrichtung hin auswirkt.

Die erste Pulverfördervorrichtung ist vorzugsweise dazu ausgebildet, einen Füllstand des Pulvers in dem zweiten Pulverreservoir konstant zu halten. Dies bietet den Vorteil, dass das Pulver von dem zweiten Pulverreservoir zu der Übergabestelle aus konstanten Druckverhältnissen heraus gefördert wird. Die in einem herkömmlichen einstufigen Pulverfördersystem stark variierende Füllhöhe des einzigen Pulverreservoirs bewirkt an der Entnahmestelle entsprechend variierende Drücke, die einen erheblichen Einfluss auf die jeweils durch eine Pulverfördervorrichtung entnommene Pulvermenge und dadurch auf die Pulverförderrate hat. Diese vorteilhafte Ausführungsform der Erfindung macht sich diese Erkenntnis zunutze, indem sie den Füllstand und damit auch die Füllhöhe des Pulvers in dem zweiten Pulverreservoir möglichst konstant hält.

Dazu kann die Pulverzuführeinrichtung einen mit der ersten Pulverfördervorrichtung verbundenen Regelkreis aufweisen, der ausgebildet ist, einen Füllstand des Pulvers in dem zweiten Pulverreservoir zu erfassen und eine von der ersten Pulverfördervorrichtung in einer vorbestimmten Zeitspanne transportierte Pulvermenge in Abhängigkeit von dem Füllstand anzupassen. Die Erfassung des Füllstandes kann beispielsweise optisch oder über eine Messung des Gewichts des Pulvers in dem zweiten Pulverreservoir erfolgen.
Die Pulverzuführeinrichtung kann eine in dem ersten Pulverreservoir angeordnete Durchmischvorrichtung umfassen, welche ausgebildet ist, das Pulver in dem ersten Pulverreservoir zu durchmischen. Die Durchmischvorrichtung bietet den Vorteil, dass der oben erwähnte Entmischungsvorgang in dem ersten Pulverreservoir, das üblicherweise einen mit der Zeit stark schwankenden Füllstand aufweisen wird, auf einfache Weise ausgeglichen wird.

Die erste Pulverfördervorrichtung kann insbesondere einen Schieber umfassen, der ausgebildet ist, das Pulver von dem ersten Pulverreservoir zu dem zweiten Pulverreservoir zu schieben. Ein Schieber bietet den Vorteil, dass die geförderte Pulvermenge einfach durch Veränderung der Anzahl von Schiebevorgängen innerhalb einer vorbestimmten Zeitspanne angepasst werden kann.

Die zweite Pulverfördervorrichtung umfasst bevorzugt eine Förderschnecke, die ausgebildet ist, sich um eine Längsachse der Förderschnecke zu drehen und das Pulver auf einem umlaufenden Gewinde zu der Übergabestelle zu transportieren und dabei das Pulver über eine Höhendifferenz zu heben. Eine Förderschnecke ist besonders geeignet, sehr kleine Pulvermengen zu transportieren, wobei außerdem die Pulverförderrate sehr fein über die Umdrehungsgeschwindigkeit der Förderschnecke eingestellt werden kann.

Dabei kann die Förderschnecke wenigstens einen Abstreifer umfassen, der ausgebildet ist, eine überschüssige Teilmenge des Pulvers von dem umlaufenden Gewinde abzustreifen, so dass die überschüssige Teilmenge des Pulvers zurück in das zweite Pulverreservoir fällt.

Die Pulverzuführeinrichtung kann mit einer dritten Pulverfördervorrichtung ausgestattet sein, welche ausgebildet ist, das Pulver von der Übergabestelle zu der Laserauftragsschweißvorrichtung zu transportieren. Vorzugsweise ist die dritte Pulverfördervorrichtung dazu ausgebildet, einen Gasstrom eines Fördergases über die Übergabestelle zu leiten, so dass das Fördergas das Pulver von der Übergabestelle zu der Laserauftragsschweißvorrichtung transportiert. Der Einsatz eines Fördergases erlaubt den gleichmäßigen Transport von sehr kleinen Pulvermengen. Das Fördergas kann das Pulver durch eine Pulverdüse direkt an den Ort des Laserstrahls bringen. Insbesondere bietet es sich dabei an, ein in dem Prozessgas verwendetes Gas als Fördergas zu verwenden, beispielsweise ein reaktionsträges Gas wie Stickstoff, das Oxidationsprozesse des Pulvers und des Werkstücks während des Aufschmelzens durch den Laserstrahl verhindert.

Vorzugsweise ist ein maximales Speichervolumen des ersten Pulverreservoirs größer als ein maximales Speichervolumen des zweiten Pulverreservoirs. Das erste Pulverreservoir wird hierbei als eigentliches Pulverreservoir verwendet. Das zweite Pulverreservoir entkoppelt das erste Pulverreservoir von der Zuführung des Pulvers zu der Übergabestelle und verhindert so einen Einfluss des Füllstandes des ersten Pulverreservoirs auf die Pulverförderrate mit den oben genannten Vorteilen. Beispielsweise kann das maximale Speichervolumen des ersten Pulverreservoirs wenigstens zehnmal so groß sein wie das maximale Speichervolumen des zweiten Pulverreservoirs.

Ein zweiter Aspekt der Erfindung führt eine Laserauftragsschweißvorrichtung mit einer erfindungsgemäßen Pulverzuführeinrichtung ein.

Ein weiterer Erfindungsaspekt betrifft die Verwendung einer solchen Laserpulverauftragsschweißvorrichtung zum Ergänzen, Aufbauen oder Reparieren eines Werkstücks, vorzugsweise einer Gasturbinenkomponente.

### Ausführungsbeispiel

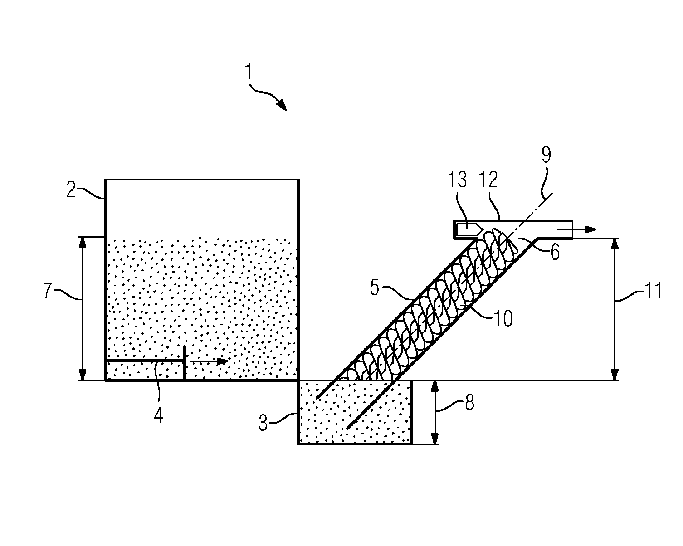

Die Erfindung wird im Folgenden anhand einer Abbildung eines Ausbildungsbeispiels näher beschrieben. Die einzige Figur 1 zeigt eine erfindungsgemäße Pulverzuführeinrichtung 1 für eine Laserpulverauftragsschweißvorrichtung in einer Seitenansicht.

Ein erstes Pulverreservoir 2 ist über eine erste Pulverfördervorrichtung 4, die in dem gezeigten Ausführungsbeispiel als Schieber ausgebildet ist, mit einem zweiten Pulverreservoir 3 verbunden. Der Schieber schiebt durch eine Schiebebewegung eine Menge des in dem ersten Pulverreservoir 2 enthaltenen Pulvers in das zweite Pulverreservoir 3, um das zweite Pulverreservoir 3 zu befüllen. Ein Füllstand 7 des ersten Pulverreservoirs 2 variiert betriebsbedingt. Um Entmischungsvorgänge im ersten Pulverreservoir 2 zu verhindern beziehungsweise auszugleichen, kann das erste Pulverreservoir 2 mit einer Durchmischvorrichtung wie beispielsweise einem Quirl oder dergleichen versehen sein. Ein Füllstand 8 des zweiten Pulverreservoirs 3 wird vorzugsweise möglichst konstant gehalten, so dass eine zweite Pulverfördervorrichtung 5, die Pulver von dem zweiten Pulverreservoir 3 zu einer Übergabestelle 6 transportiert, jederzeit aus vergleichbaren Druckverhältnissen heraus Pulver fördert. Zudem ist es vorteilhaft, den Füllstand 8 des zweiten Pulverreservoirs im Verhältnis zu dem Füllstand 7 im ersten Pulverreservoir 2 gering zu halten, um Entmischungsvorgängen des Pulvers im zweiten Pulverreservoir 2 gering zu halten. Deshalb sollte das maximale Speichervolumen (maximaler Füllstand) des ersten Pulverreservoirs 2 auch größer als das des zweiten Pulverreservoirs 3 sein.

Die zweite Pulverfördervorrichtung 5 ist im gezeigten Ausführungsbeispiel als Förderschnecke ausgeführt, die in bekannter Art sich um eine Längsachse 9 dreht und auf einem umlaufenden Gewinde 10 Pulver über eine Höhendifferenz 11 zu der Übergabestelle 6 befördert. Der Einsatz einer Förderschnecke bietet sich für die Umsetzung der Erfindung besonders an, weil sie einen kontinuierlichen Fluss einer sehr geringen Pulvermenge ermöglicht.

An der Übergabestelle 6 wird das mit möglichst gleichbleibender Pulverförderrate geförderte Pulver an die Laserauftragsschweißvorrichtung übergeben. Hierzu kann eine dritter Pulverfördervorrichtung 12 vorgesehen sein, die im gezeigten Ausführungsbeispiel eine Gasdüse 13 umfasst, die einen Gasstrom einstellbarer Stärke über das an die Übergabestelle 6 geförderte Pulver leitet und so mit einem über die Übergabestelle 6 geleiteten Gasstrom eines Fördergases das Pulver zu der Laserauftragsschweißvorrichtung beziehungsweise in den Fokus des für das Micro-Cladding-Verfahren verwendeten Lasers transportiert.

Ausführungsformen der Erfindung bieten den Vorteil, dass kleinere Kornfraktionen mit Durchmessern zwischen 5 und 20 Mikrometern oder unregelmäßig geformte Körner zuverlässig und mit möglichst geringer Schwankung der Pulverförderrate gefördert werden können. Auch kann es möglich werden, den Anteil von kleinen Körnern im Pulver zu erhöhen, wodurch der Aufwand für das Sieben des Pulvers vorteilhaft reduziert werden kann. Der Einsatz von feineren Pulvern (Kornfraktion 5 bis 20 Mikrometer Durchmesser) kann zudem neue Anwendungen für den Micro-Cladding-Prozess erschließen. Hierbei sind insbesondere kleinere oder größere Auftragsraten denkbar. Auch können andere Legierungen und Legierungskombinationen schweißbar werden. Zudem wird durch die Aufteilung in zwei Pulverreservoire die Entmischung des Pulvers reduziert, so dass sich insbesondere im Dauerschweißbetrieb im industriellen Maßstab auch langfristig gleichbleibende Prozesseigenschaften ergeben.

Obwohl die Erfindung im Detail durch Ausführungsbeispiele von bevorzugten Ausführungsformen näher illustriert und beschrieben wurde, ist die Erfindung nicht durch die offenbarten Beispiele eingeschränkt. Variationen der Erfindung können vom Fachmann aus den gezeigten Ausführungsbeispielen abgeleitet werden, ohne den Schutzumfang der Erfindung, wie er in den Ansprüchen definiert wird, zu verlassen.

## Patentansprüche

1. Eine Pulverzuführeinrichtung für eine Laserauftragsschweißvorrichtung,
die Pulverzuführeinrichtung aufweisend ein erstes Pulverreservoir, ein zweites Pulverreservoir, eine erste Pulverfördervorrichtung und eine zweite Pulverfördervorrichtung, wobei die erste Pulverfördervorrichtung ausgebildet ist, ein Pulver von dem ersten Pulverreservoir in das zweite Pulverreservoir zu transportieren, und
wobei die zweite Pulverfördervorrichtung ausgebildet ist, das Pulver von dem zweiten Pulverreservoir zu einer Übergabestelle zu transportieren.

2. Die Pulverzuführeinrichtung von Anspruch 1,
bei der die erste Pulverfördervorrichtung ausgebildet ist, einen Füllstand des Pulvers in dem zweiten Pulverreservoir konstant zu halten.

3. Die Pulverzuführeinrichtung von Anspruch 2,
mit einem mit der ersten Pulverfördervorrichtung verbundenen Regelkreis, der ausgebildet ist, einen Füllstand des Pulvers in dem zweiten Pulverreservoir zu erfassen und eine von der ersten Pulverfördervorrichtung in einer vorbestimmten Zeitspanne transportierte Pulvermenge in Abhängigkeit von dem Füllstand anzupassen.

4. Die Pulverzuführeinrichtung von einem der vorhergehenden Ansprüche,
mit einer in dem ersten Pulverreservoir angeordneten Durchmischvorrichtung, welche ausgebildet ist, das Pulver in dem ersten Pulverreservoir zu durchmischen.

5. Die Pulverzuführeinrichtung von einem der vorhergehenden Ansprüche,
bei der die erste Pulverfördervorrichtung einen Schieber umfasst, der ausgebildet ist, das Pulver von dem ersten Pulverreservoir zu dem zweiten Pulverreservoir zu schieben.

6. Die Pulverzuführeinrichtung von einem der vorhergehenden Ansprüche,
bei der die zweite Pulverfördervorrichtung eine Förderschnecke umfasst, die ausgebildet ist, sich um eine Längsachse der Förderschnecke zu drehen und das Pulver auf einem umlaufenden Gewinde zu der Übergabestelle zu transportieren und dabei das Pulver über eine Höhendifferenz zu heben.

7. Die Pulverzuführeinrichtung von Anspruch 6,
bei der die Förderschnecke wenigstens einen Abstreifer umfasst, der ausgebildet ist, eine überschüssige Teilmenge des Pulvers von dem umlaufenden Gewinde abzustreifen, so dass die überschüssige Teilmenge des Pulvers zurück in das zweite Pulverreservoir fällt.

8. Die Pulverzuführeinrichtung von einem der vorhergehenden Ansprüche,
mit einer dritten Pulverfördervorrichtung, welche ausgebildet ist, das Pulver von der Übergabestelle zu der Laserauftragsschweißvorrichtung zu transportieren.

9. Die Pulverzuführeinrichtung von Anspruch 8,
bei der die dritte Pulverfördervorrichtung ausgebildet ist, einen Gasstrom eines Fördergases über die Übergabestelle zu leiten, so dass das Fördergas das Pulver von der Übergabestelle zu der Laserauftragsschweißvorrichtung transportiert.

10. Die Pulverzuführeinrichtung von einem der vorhergehenden Ansprüche,
bei der ein maximales Speichervolumen des ersten Pulverreservoirs größer als ein maximales Speichervolumen des zweiten Pulverreservoirs ist.

11. Die Pulverzuführeinrichtung von Anspruch 10,
bei der das maximale Speichervolumen des ersten Pulverreservoirs wenigstens zehnmal so groß ist wie das maximale Speichervolumen des zweiten Pulverreservoirs.

12. Eine Laserauftragsschweißvorrichtung mit einer Pulverzuführeinrichtung gemäß einem der vorhergehenden Ansprüche.

13. Verwendung einer Laserpulverauftragsschweißvorrichtung gemäß Anspruch 12 zum Ergänzen, Aufbauen oder Reparieren eines Werkstücks, vorzugsweise einer Gasturbinenkomponente.
